(19) Europäisches Patentamt / European Patent Office / Office européen des brevets

(11) **EP 1 963 408 B1**

(12) **EUROPEAN PATENT SPECIFICATION**

(45) Date of publication and mention
of the grant of the patent:
**27.11.2019 Bulletin 2019/48**

(21) Application number: **06732762.7**

(22) Date of filing: **31.03.2006**

(51) Int Cl.:
*C08J 5/18* *(2006.01)*   *B01D 69/02* *(2006.01)*
*B01D 53/22* *(2006.01)*   *B01D 71/26* *(2006.01)*
*B29C 55/00* *(2006.01)*   *B01D 67/00* *(2006.01)*

(86) International application number:
**PCT/KR2006/001189**

(87) International publication number:
**WO 2007/073019 (28.06.2007 Gazette 2007/26)**

(54) **METHOD FOR PREPARING MICROPOROUS FILMS OF SEMICRYSTALLINE POLYMER**

HERSTELLUNGSVERFAHREN FUER MIKROPORÖSE FOLIEN AUS TEILKRISTALLINEM POLYMER

PROCEDE DE PREPARATION DES PELLICULES MICROPOREUSES DE POLYMERE SEMI-CRISTALLIN

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.12.2005 KR 20050127141**

(43) Date of publication of application:
**03.09.2008 Bulletin 2008/36**

(73) Proprietors:
• **SK Innovation Co., Ltd.**
**Seoul 110-110 (KR)**
• **SK IE Technology Co., Ltd.**
**Seoul 03188 (KR)**

(72) Inventors:
• **LEE, Young-Keun**
**Daejeon 305-728 (KR)**
• **RHEE, Jang-Weon**
**Daejeon 305-728 (KR)**
• **KANG, Gwi-Gwon**
**Daejeon 305-810 (KR)**
• **JUNG, In-Hwa**
**Chungcheongnam-do 330-795 (KR)**
• **LEE, Je-An**
**Daejeon 305-301 (KR)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
WO-A2-03/042747    JP-A- 2000 017 100
JP-A- 2000 204 188    JP-A- 2002 338 730
JP-A- 2004 196 871    US-A- 5 683 634
US-B1- 6 558 607

**Description**

**[Field of the Invention]**

The present invention is related to a method of manufacture for microporous films of semicrystalline polymers. In more detail, the present invention is related to the manufacture of microporous films of semicrystalline polymers made through the stretching process of the pore region, swollen region, and crystalline region formed from the phase separation process between a semicrystalline polymer resin and a diluent without the addition of a foaming agent generating pores internally or a filler making pores through the plastic deformation process such as stretching, etc. at the interface with the polymer resin forming the matrix.

[Background of the Invention]

Microporous films of semicrystalline polymers have been widely used as various battery separators, separation filters, microfiltration membranes, air-permeable dampproof clothes, etc. in many industrial areas.

General methods of making porous films from semicrystalline polymers include a) a method of making cells by mixing a foaming agent, making cells by generating gases internally during the process of molding, with semicrystalline polymers and foaming the mixture during the process of molding, and b) a method of cell formation of the space occupied by a filler by adding a polymer resin forming the matrix and a incompatible filler, tearing the interface of two components through plastic deformation such as stretching, etc. or extracting the filler. (In this case, as a filler, a heteropolymer resin which is thermodynamically phase-separated or an organic/inorganic material having the higher strength than a fixed level in the plastic deformation step of the polymer resin forming the matrix is used.) Between the two, the method of making microporous films by using a foaming agent has not been used widely as a method of manufacture of microporous films in that it is difficult to control the size of cells, the permeability of cells is lowered as closed cells are formed if the size of cells is small, and the size of cells becomes too large and the permeability is too high if open cells are formed.

On the other hand, the method of making porous films by using tearing of the interface between the matrix polymer and filler is disclosed in U.S. Patent No. 6,319,975. This patent is related to a method of making porous films by adding calcium carbonate to polyethylene, stretching, and tearing the interface between polyethylene and calcium carbonate. The method of making microporous films by adding a filler and extracting the filler again is disclosed in U.S. Patents Nos. 4,335,193 and 5,641,565. Described in these patents is a method of manufacture of polyolefin porous films by adding an organic liquid compound such as dioctylphthalate, liquid paraffin, etc. and an inorganic filler to polyolefin, processing these, and removing the organic liquid compound and the inorganic filler. But this method of using a filler such as silica, calcium carbonate, etc. is disadvantageous in that it is difficult to obtain uniform distribution during the process of feeding and compounding of an inorganic filler, and further, to obtain microporous films. This method also has a disadvantage of being complicated as the inorganic filler should be removed.

Further, disclosed in U.S. Patent No. 5,853,633 is a method of obtaining microporous films in which uniformly distributed micropores having the ratio, B/A, of less than 0.5, where A is the size of pores and B is the thickness of the pore wall, destroy the boundary of the pores of the resin composition. As to the micropores in this invention, permeable porous films are made only when plastic deformation, during which the boundary of pores is destroyed, is applied. It is, therefore, disadvantageous in that it has a narrow processing window and also it is difficult to obtain microporous films having an uniform pore size, and physical properties of the microporous films may become weak.

US 6,558,607 B1 describes micro- and nano-porous materials made from crosslinked polymers crystallized from supercritical fluids. The resulting products show an open cell porous network, and can be used for a variety of applications in medical fields, textiles, separation science and others. The document also describes methods for obtaining such products.

WO 03/042747 A2 describes optical devices having reflective and transmissive modes for display. More specifically, display apparatuses are shown capable of displaying information in a reflective mode using only ambient light and in a transmissive mode using a light source. In one embodiment of the display apparatus, a microstructured film is included above a light cavity and below a light modulating system where the microstructured film includes sawtooth formations having at least a tilted surface.

**[Disclosure]**

**[Technical Problem]**

Accordingly, the inventors of the present invention repeated extensive studies in order to solve problems with prior art. The present inventors found out that it was possible to manufacture sheets of which cross-section has both of a part of pore region and swollen region distributed randomly to have various sizes and shapes by controlling phase separation within an extruder, i.e., by controlling the phase separation temperature and residence time extensively in the phase separation region, after mixing the semicrystalline polymer resin and diluent in a single phase. The present inventors further found out that it was possible to manufacture microporous films having a very uniform and superior permeability by stretching the above sheets since micropores are formed without destroying the boundary of pores as the swollen region is split. That is, the present inventors learned that it was possible to manufacture permeable sheets having a matrix cross-section which was divided into the pore region, swollen region, and crystalline region that are formed through the phase separation process between the semicrystalline resin and diluent without adding a foaming agent or filler, and further, to manufacture microporous films of semicrystalline polymers through the stretching process without destroying pores.

In more detail, in sheets manufactured through the phase separation between a semicrystalline polymer resin and diluent, it is possible to manufacture microporous films having superior physical properties and uniformity by controlling the phase separation between the semicrystalline polymer and diluent in a resin composition for the manufacture of sheets to form a pore region that has pores distributed randomly and irregularly and connected each other three dimensionally, a non-crystalline region which is in the matrix phase and swollen by a diluent, and a crystalline region (here, pore region refers to the diluent-rich phase that is shown as pores after the freeze-drying process after extraction, and the swollen non-crystalline region refers to a phase in which no pores are formed even after the freeze-drying process after extraction); stretching the sheets of this resin composition to form permeable micropores as the swollen non-crystalline region is split; and extracting the diluent after the stretching process.

Therefore, it is an object of the present invention to provide a method of manufacture of sheets having a complex matrix structure, of which a part of the cross-section of the sheets formed through an extrusion die by controlling the phase separation between the semicrystalline resin and diluent is a pore region having non-uniform shapes and sizes; the major part is a non-crystalline swollen region forming the main part which is in the matrix phase in which the resin and diluent are swollen; and another part is a crystalline region. It is another object of the present invention to provide a method of manufacture of microporous films having a superior permeability by stretching the above sheets and extracting the diluent.

It is still another object of the present invention to provide a new method of manufacturing microporous films having superior uniformity of pores by fabricating microporous films having a sufficiently superior gas permeability without performing stretching that destroys the boundary of pores during stretching contrary to prior arts.

It is yet another object of the present invention to provide a method of manufacturing microporous films, of which gas permeability of the sheets prior to stretching and that after stretching are not different greatly or that after stretching is lower than that prior to stretching, in order to increase uniformity of microporous film products eventually.

**[Technical Solution]**

The present invention provides a method of manufacturing microporous polymer films by stretching sheets at a temperature that is lower than the melting temperature of the crystalline portion of said sheets by 3 to 15°C, obtained through phase separation of a semicrystalline polymer and a diluent, and extracting said diluent, wherein the cross-section of said sheets is comprised of the crystalline region, the pore region penetrating the sheet in thickness direction by connecting in three dimensions, and the non-crystalline region swollen by said diluent, wherein said pore region has irregular sizes and structures, an average diameter of the pore is 0.01 $\mu$m to 2 $\mu$m, and a volume ratio of the pore region with respect to the volume of the entire composition is 10% to 40%, and wherein said non-crystalline region has a swelling ratio of 200% or greater, is split during the process of stretching, and generates pores having an average diameter of 0.01 $\mu$m to 1 $\mu$m.

According to the present invention, microporous films of the semicrystalline polymer resin are obtained by stretching semicrystalline polymer resin sheets extruded through a die with the phase separation between a semicrystalline polymer resin and a diluent, of which cross-section is comprised of a order to increase uniformity of microporous film products eventually.

**[Technical Solution]**

The present invention provides a method of manufacturing microporous polymer films by stretching sheets, obtained through phase separation of a semicrystalline polymer and a diluent, and extracting said diluent, wherein the cross-section of said sheets is comprised of the crystalline region, the pore region penetrating the sheet in thickness direction by connecting in three dimensions, and the non-crystalline region swollen by said diluent, wherein said pore region has irregular sizes and structures, an average diameter of the pore is 0.01 $\mu$m to 2 $\mu$m, and a volume ratio of the pore region with respect to the volume of the entire composition is 10% to 40%, wherein said non-crystalline region has a swelling ratio of 200% or greater, is split during the process of stretching, and generates pores having an average diameter of 0.01 $\mu$m to 1 $\mu$m, wherein the pores' interface is not torn or destroyed when stretching said resin sheets.

According to the present invention, microporous films of the semicrystalline polymer resin are obtained by stretching semicrystalline polymer resin sheets extruded through a die with the phase separation between a semicrystalline polymer resin and a diluent, of which cross-section is comprised of a crystalline region, a pore region and a non-crystalline region which is in the main matrix phase and is a swollen region swollen by the diluent, and extracting the diluent. The pore region has irregular sizes and shapes, has an average diameter of 0.01 $\mu$m to 2 $\mu$m, is connected in three dimensions, penetrates the thickness of the sheet, has gas permeability, and has a volume ratio with respect to the volume of the entire composition of 10% to 40%. The swollen non-crystalline region has a swelling ratio of 200% or greater and is a region making micropores of which average diameter is 0.01 $\mu$m to 1 $\mu$m as the region is split and pores are generated during the process of stretching. Thus manufactured microporous films are characterized by having a gas permeability of $1.3 \times 10^{-5}$ Darcy or greater as well as a puncture strength of 0.1 N/$\mu$m or greater even without solution of the semicrystalline polymer and diluent in the thermodynamic single phase is cooled slowly, there occurs the phase separation between the semicrystalline polymer and diluent during the process of cooling. The mechanism of phase separation occurring at this time may be largely divided into two: liquid-liquid phase separation phenomenon in which phase separation occurs thermodynamically when both of the semicrystalline polymer and diluent are in the liquid state; and solid-liquid phase separatioin phenomenon in which the solid semicrystalline polymer and liquid diluent are separated when the semicrystalline polymer is crystallized at a temperature below the crystallization temperature of the semicrystalline polymer as there occurs no thermodynamic liquid-liquid phase separation up to the temperature of crystallization of the semicrystalline polymer.

If phase separation of the semicrystalline polymer and diluent occurs, that phase is divided into three: a diluent-rich phase comprised of an extremely small amount of semicrystalline polymer dissolved in the diluent and the diluent; a swollen phase in which the non-crystalline portion of the semicrystalline polymer is swollen in the diluent; and a crystalline phase of the semicrystalline polymer having no diluent. Here, the diluent-rich phase is referred to as a pore region since this region is observed in the form of pores during freeze-drying after extraction, while the swollen phase refers to a phase in which pores are not generated even after freeze-drying after extraction before stretching but generates pores after passing through extraction process after stretching since the phase is split while going through stretching process. Finally, the crystalline phase refers to the matrix phase in which no pores are generated even after going through processes such as stretching, extraction, etc.

The basic theory of making microporous films in the present invention is that a resin composition having three phases mentioned in the above and is comprised of a semicrystalline polymer and a diluent is stretched while the crystalline phase forms a matrix, during which the swollen phase between crystalline phases is split thus forming new micropores. During this process, the tortuosity of pores is increased and the pores have the function for microporous films.

Therefore, the characteristics of microporous films manufactured from the resin composition of a semicrystalline polymer and a diluent vary depend on the morphology of the resin composition cooled. That is, the ratio of combination and shapes of the diluent-rich phase (hereinafter referred to as the pore region), swollen phase, and crystalline phase of the resin composition cooled determine the characteristics of microporous films.

The morphology of the resin composition cooled varies according to the mechanism of phase separation mentioned in the above as well. That is, in case of liquid-liquid phase separation, the diluent-rich phase is separated thermodynamically and exists with a thermodynamic ratio; and in case of solid-liquid phase separation, the diluent-rich phase is determined by kinetics that is affected by the diffusion speed of the diluent during the process of solid-liquid phase separation. However, both of the above two mechanisms of phase separation have the same basic appearance in that there are three phases but simply has different composition and ratio of each phase. Therefore, it is not critical that there is a difference in the mechanism of phase separation as long as the conditions for phase separation are met. And yet, it is advantageous to employ the liquid-liquid phase separation obtaining the profer degree of phase separation in order to form proper pore region and to obtain swelling effect.

[Mode of Invention]

The present invention is illustrated in more detail below:

In the present invention, the resin composition for the manufacture of uniform microporous films of semicrystalline polymer is comprised of a pore region having pores that are irregularly distributed and interconnected in three dimensions by the phase separation between a semicrystlline polymer and a diluent and non-crystals that are swollen by the diluent. The pore region is a region having irregular sizes and structures; of which cross-section has an average diameter of 0.01 $\mu$m to 2 $\mu$m; which is connected in three dimensions thus penetrating the sheet; and having the volume ratio with respect to the volume of the entire resin composition of 10% to 40%. The swollen non-crystalline region has a swelling ratio of 200% or greater.

In the present invention, the polymer resin to be used should be a semicrystalline polymer in order to have a crystalline part forming a matrix and a non-crystalline region swollen. Semicrystalline polymers include a polyolefin such as polyethylene, polypropylene, etc, using ethylene, propylene, and $\alpha$-olefin, or their copolymers, or their mixture, nylon resin, polyvinyl alcohol, polyvinyl fluoride, polyethylene terephthalate, etc. Among them, it is most preferable to use polyolefin and their mixtures having superior processibility, chemical resistance, and economic effieciency. Also, the molecular weight of a semicrystalline polymer resin is not limited as long as the morphology of a cross-section pursued in the present invention is provided. But, in case of polyolefin, it is preferable to have a weight average molecular weight of 200,000 to 450,000 for processing, compounding, and extrusion. As to a diluent, any organic liquid compound, which can form a single phase at the processing temperature of the semicrystalline polymer to be used and can be extracted with a third solvent, may be used. But it is preferable to use a diluent which can form a single phase with the semicrystalline polymer at the melt-compounding temperature with the semicrystalline polymer but can be subject to liquid-liquid phase separation at an extrusion temperature in order to form a proper pore region and to obtain swelling effects. Examples for the polyolefin include phthalic acid esters such as dibutylphthalate, dioctylphthalate, etc.; aromatic ethers such as diphenyl ether, benzyl ether, etc.; aliphatic acids having 10 to 20 carbon atoms such as palmitic, stearic acid, oleic acid, etc.; aliphatic acid alcohols having 10 to 20 carbon atoms such as palmitic acid alcohol, stearic acid alcohol, oleic acid alcohol, etc; and aliphatic esters, in which one or more aliphatic acids selected from saturated or unsaturated aliphatic acids having 4 to 26 carbon atoms in the aliphatic acid group such as palmitic acid mono-, di-, or tri-ester, stearic acid mono-, di-, or tri-ester, oleic acid mono-, di-, or tri-ester, linoleic acid mono-, di-, or tri-ester, etc. are ester-combined with an alcohol having 1 to 8 hydroxy groups and 1 to 10 carbon atoms. Aliphatic or cyclic hydrocarbons may be mixed with the above diluents in order to improve thermal stability.

The above semicrystalline polymer resin and diluent are compounded at a temperature higher than the temperature of liquid-liquid phase separation of the composition in order to make a thermodynamically single phase during the process of compounding. When compounding the resin, a complete thermodynamic single phase should be obtained. If it is failed to achieve a thermodynamic single phase during compounding, it is not possible to form microporous films since compound becomes inferior and the size and volume of the pore region becomes greater. A twin screw compounder, kneader, or Banbury mixer designed for compounding may be used. The molten mixture thus compounded is extruded through a die and molded in the form of a sheet while cooling. The semicrystalline polymer and diluent are blended in advance and fed into a compounder or fed separately from the separate feeder. As to the processing temperature of the composition, for the liquid-liquid phase separation of the semicrystalline polymer and diluent, it is desirable to have a phase separation zone in which the molten mixture is extruded while maintaining a temperature lower than the temperature of liquid-liquid phase separation after making a thermodynamic single phase at a temperature higher than the liquid-liquid phase separation temperature. Particularly, it is possible to adjust the size and ratio of the pore region by using liquid-liquid phase separation in the phase separation zone in case that the extruder temperature is controlled to have a compounding zone and a phase separation zone separately. That is, in case that phase separation is taken place by cooling after the molten mixture is extruded from the die as in the case of usual extrusion, it is difficult to control the degree of phase separation since the time for phase separation is too short, whereas it is possible to control the degree of phase separation readily if phase separation is taken place in an extruder. The size and ratio of the pore region are increased as the temperature of liquid-liquid phase separation is lowered and the time for it becomes longer. For instance, if dibutylphthalate, which is subject to liquid-liquid phase separation with a polyolefin, is used, it is proper that the temperature for compounding is 200 - 240 °C and the temperature of extrusion in the die is 150 - 170 °C and the residence time in the liquid-liquid separation zone should be shorter than 1 minute. If the residence time exceeds 1 minute, the size of the pore region becomes improperly large for microporous films.

If necessary, general additives for improving specific functions such as oxidation stabilizers, UV stabilizers, antistatic agents, etc. may be further added to the above composition.

For the method making sheet from the molten mixture, both casting or calendaring methods using air or water cooling may be used. The morphology of molded sheet varies depending on the speed of cooling. That is, the ratio and size of the pore region become small if the speed of cooling is too fast, whereas it is not possible to form microporous films as the size of the pore region becomes too large if the speed of cooling is too slow, particularly, in the case of a liquid-liquid phase separation system. Therefore, a proper speed of cooling varies depending on the semicrystalline polymer and diluent to be used, and the proper speed of cooling when using a polyolefin and dibutylphthalate is 200°C /minute - 500 °C /minute.

The manufactured sheet of the semicrystalline polymer and diluent as described in the above is divided into three phases: a diluent-rich phase comprised of an extremely small amount of semicrystalline polymer dissolved in the diluent and the diluent; a swollen phase in which the non-crystalline portion of the semicrystalline polymer is swollen in the diluent; and a crystalline phase of the semicrystalline polymer having no diluent. Here, the diluent-rich phase is referred to as a pore region since this region is observed in the form of pores during the process of freeze-drying after extraction, while the swollen phase refers to a phase in which pores are not generated even after freeze-drying after extraction before stretching but generates pores after passing through extraction process after stretching since the phase is split while going through the process of stretching. Finally, the crystalline phase refers to the matrix phase in which no pores are generated even after going through processes such as stretching, extraction, etc.

The pore region according to the present invention has irregular sizes and structures, has an average diameter

of 0.01 μm to 2 μm, is connected in three dimensions and penetrates the sheet in view of that it has a sufficient permeability even before it is stretched. And its volume ratio with respect to the volume of the entire resin composition is 10% to 40%. The pore region is a region which is connected before the process of stretching in three dimensions to give permeability to the sheet. It lowers the tortuosity of micropores so that microporous films have a high permeability. However, if the diameter is less than 0.01 μm, the size of pores is too small and the above effects are not shown, and if it is greater than 2 μm, it acts rather as a defect of microporous films lowering physical properties of microporous films and uniformity of micropores. It is preferable that the volume ratio of this pore region with respect to the volume of the entire molded product is 10% to 40%. If the pore region is less than 10%, the permeability of sheets becomes diminished, and the permeability of microporous films after stretching becomes very low as well. If the pore region exceeds 40%, the porosity is increased greatly, the tortuosity of micropores is lowered greatly, and huge pores having a diameter of greater than 2 μm are generated thus increasing the defect of microporous films and lowering physical properties of microporous films as well as uniformity of micropores.

The swollen non-crystalline portion according to the present invention is a region having a swelling ratio of greater than 200% and making micropores of which cross-section has an average diameter of 0.01 μm to 1 μm by forming three-dimensionally connected pores as it is split during stretching process.

The swollen region is split during the process of stretching, makes micropores, and is connected with the existing pore region. During this process, pores are connected, the tortuosity of pores is increased, and an average size of pores of the stretched films becomes small. If porous films have a constant porosity, the permeability of the porous films is proportional to the size of pores but inversely proportional to the square of tortuosity. For this reason, the actual permeability of porous films does not vary greatly during the process of stretching but may become small in some cases. The process of stretching plays the roles of increasing the orientation of semicrystalline polymer, improving physical properties of porous films, and giving an uniform size of pores as well as a necessary tortuosity.

If the swelling ratio in the swollen region is less than 200%, no pores are generated during stretching as the swollen part during stretching is not split but remains in the matrix phase as the matrix phase. Therefore, the permeability of microporous films becomes very low and the functions of microporous films cannot be achieved. The size of micropores formed as the swollen region is split is affected by not only the swelling ratio but also the conditions for stretching greatly. If the temperature of stretching is too low, pores are not generated or are broken since the swollen region fails to be split but is stretched in the matrix phase as the crystalline phase. Whereas, if the temperature of stretching is too high, pores are blocked since the swollen region is molten, and at the same time, blown up, or large pores are generated partially, and thus, the functions as microporous films are not achieved. The size of pores made by the swollen region satisfying the above conditions is 0.01 μm to 1 μm.

The temperature of stretching is lower than the melting temperature of the crystalline portion of the compounded sheet by 3 to 15°C.

As described in the above, by satisfying the conditions for the pore region and the swollen region according to the present invention, it is possible to manufacture semicrystalline microporous polymer films having superior physical properties including the gas permeability of greater than 1.3 x 10$^{-5}$ Darcy and puncture strength of greater than 0.1 N/μm without destroying the boundry of pores or breaking pores during stretching.

Stretching of the sheets made through compounding, extrusion, and cooing may be conducted in the roll-type or tenter-type sequential or simultaneous stretching machine. Here, it is preferable that stretching ratio is greater than 4 times each in the machine and transverse directions and the total stretching ratio is 25 ~ 50 times. If the ratio of stretching in one direction is less than 4 times, the tensile strength, puncture strength, etc. are lowered since orientation in one direction is not sufficient and the physical properties in the machine and transverse directions is unbalanced. Also, if the total stretching ratio is less than 25 times, incomplete stretching occurs; and if it exceeds 50 times, it is likely to have puncture during stretching.

Stretched films are then extracted and dried by using an organic solvent. Organic solvents that may be used in the present invention are not limited specifically, but any solvent that can extract the diluent used for the extrusion of the resin may be used. It is preferable to use methyl ethyl ketone, methylene chloride, hexane, etc. that may be extracted efficiently and dried promptly. As to the process of extraction, all general process of extraction of solvents such as immersion process, solvent spray process, ultrasonic process, etc. may be used individually or in combination with each other. During extraction, the content of the remaining diluent should be less than 2 weight %. If the content of the remaining diluent exceeds 2 weight %, physical properties are lowered and the permeability of films is reduced. The amount (efficiency of extraction) of the remaining diluent depends greatly on the temperature and time of extraction. It is better that the temperature of extraction is high to increase the solubility of the diluent and solvent, but is lower than 40°C in view of the safety in boiling of the solvent. However, the temperature of extraction should be higher than the freezing point of the diluent at all times since the efficiency of extraction is lowered greatly if the temperature of extraction is lower than the solidification point of the diluent. The time of extraction varies according to the thickness of films to be produced, but 2 ~4 minutes is proper in case of producing 10- to 30-μm-thick general microporous films.

As descrived above, semicrystalline microporous films can be manufactured through the process of stretching of the pore region and swollen region formed through the process of phase separation between the semicrystalline polymer and diluent without adding a foaming agent or filler.

The present invention is illustrated in more detail below:

The average molecular weight of a semicrystalline polymer and the molecular weights distribution were measured in terms of Gel Permeation Chromatography (GPC) of Polymer content of the remaining diluent should be less than 2 weight %. If the content of the remaining diluent exceeds 2 weight %, physical properties are lowered and the permeability of films is reduced. The amount (efficiency of extraction) of the remaining diluent depends greatly on the temperature and time of extraction. It is better that the temperature of extraction is high to increase the solubility of the diluent and solvent, but is lower than 40 in view of the safety in boiling of the solvent. However, the temperature of extraction should be higher than the freezing point of the diluent at all times since the efficiency of extraction is lowered greatly if the temperature of extraction is lower than the solidification point of the diluent. The time of extraction varies according to the thickness of films to be produced, but 2 4 minutes is proper in case of producing 10- to 30-$\mu$m-thick general microporous films.

As described above, semicrystalline microporous films can be manufactured through the process of stretching of the pore region and swollen region formed through the process of phase separation between the semicrystalline polymer and diluent without adding a foaming agent or filler.

The present invention is illustrated in more detail below: stretching machine was employed for stretching of the sheets manufactured for stretching. The speed of stretching was maintained at 2.0 m/minute.

The extraction of the diluent was done by immersion process using methylene chloride. 50$\mu$m thick sheets were immersed for 24 hours and freeze-dried for their extraction and drying. Stretched films were air-dried for 6 minutes after immersion, fixed to a frame, and aged for 90 seconds in a convection oven at 120°C.

Physical properties of the sheets and films thus manufactured were measured in the following methods:

(1) Tensile strength was measured with ASTM D882.

(2) Puncture strength was measured in terms of the strength of puncturing of films by a 0.5-mm-diameter pin at a speed of 120 mm/minute.

(3) Gas permeability was measured with a porometer (CFP-1500-AEL of PMI Company). Although gas permeability is generally indicated in terms of Gurley number, it is difficult to obtain the relative permeability depending on the pore structure of the films themselves since the effect of the thickness of the films is not corrected in employing the Gurley number. In order to solve this problem, Darcy's permeability constant was used in the present invention. Darcy's permeability constant may be obtained according to the following Equation 1, where nitrogen is used in the present invention:

[Equation 1]

$$C = (8\ F\ T\ V)\ /\ (\pi D^2 (P^2 - 1))$$

where C = Darcy's permeability constant
F = Flow rate
T = Thickness of a sample
V = Viscosity of a gas (0.185 for $N_2$)
D = Diameter of a sample
P = Pressure

In the present invention, an average value of Darcy's permeability constants in the region of 100 ~200 psi was used.

(4) Porosity was measured with a mercury porosimeter (Model 61037051 of Poremaster Company) and a Scanning Electron Microscopy (SEM). The porosity of the sheets prior to stretching is the ratio of the pore region.

(5) In observing the inner morphology of the sheets by using an SEM, the sheets were subject to microtoming at -120°C by using a glass blade, and the diluent was extracted for 24 hours by using methylene chloride and freeze-dried. The porosity (ratio of the pore region) was also computed by computing the ratio of the pore region in the SEM images. The ratio of the pore region measured with the above mercury porosimeter in (4) was used for the computation of the swelling ratio, and the ratio of the pore region observed with a scanning electron microscope was used as the confirming data for the results obtained by using the mercury porosimeter. The ratios of the pore regions measured in the above two methods tended to be consistent within the range of experimental errors.

Swelling ratio (SR) of the sheets was calculated as follows:

[Equation 2]

$$SR(Volume\ \%) = [(Volume\ of\ non\text{-}crystalline\ region\ of\ the\ sheets\ formed\ after\ compounding\ of\ the\ diluent)/(\ Volume\ of\ non\text{-}crystalline\ region\ of\ the\ semicrystalline\ polymer\ fed)]\ x\ 100$$

$$= [R_1\ (1 - \delta_a) + (R_2 - P_o)]/[\ R_1\ (1 - \delta_b)]\ x\ 100$$

where, $R_1$ = Ratio of the volume of the semicrystalline polymer in the sheets
$R_2$ = Ratio of the volume of the diluent in the sheets
$\delta_b$ = Crystallinity of a semicrystalline polymer
$\delta_a$ = Crystallinity of the semicrystalline polymer in the sheets
$P_o$ = Porosity (ratio of the pore region) of the sheets

The crystallinity of the polymer resin was calculated with DSC using the ratio of the heat of fusion (enthalpy) of the resin and that of 100% crystals. For instance, in case of polyethylene, the heat of fusion of 100% crystals was 295 J/g and that of polypropylene was 145 J/g.

[Technical Solution]

Hereinafter, the present invention is illustrated in more detail in terms of a few preferred embodiments as follows:

Preferred Embodiment 1

High-density polyethylene having a weight average molecular weight of 3.0 x $10^5$ g/mol was used for the semicrystalline polymer, and dibutylphthalate was used for the diluent. The weight ratio of the semicrystalline polymer and the diluent was 40/60, and the volume ratio was 42.4/57.6. This composition was subject to liquid-liquid phase separation, and the residence time in an extruder at a temperature lower than the temperature of phase separation was 100 seconds. The temperature of extrusion was 250°C. and the temperature of phase separation in the extruder was 180°C. The heat of fusion of high-density polyethylene used was 190 J/g, and the crystallinity was 64.4%. And the heat of fusion in the sheets extruded was 91 J/g making the crystallinity excluding the diluent 77.1%. It was seen that the crystallinity of polyethylene itself was increased as affected by the diluent. Stretching of the sheets was done by simultaneous stretching of 6 times each in the machine and transverse directions at 119°C The thickness of microporous films obtained through extraction, drying, and aging was 16 μm. The ratio of the pore region and swollen region and the characteristics of the films thus manufactured are summarized in Table 1. As a result of observation of the images of the cross-sections of microporous films thus manufactured, it was seen that the interface of pores was not destroyed actually, the major area of the sheets prior to stretching was swollen region with a part of pore region, and microporous films after stretching had the pore interface, of which size was greater than the size of pores on an average on the whole.

Preferred Embodiment 2

As semicrystalline polymers, 90 weight % of high-density polyethylene having a weight average molecular weight of 4.0 x $10^5$ g/mol and containing 0.5 weight % of butene-1 as a co-monomer, and 10 weight % of homopolypropylene having a weight average molecular weight of 4.5 x $10^5$ g/mol were used. Dibutylphthalate was used for the diluent. The weight ratio of the semicrystalline polymers and the diluent was 35/65, and the volume ratio was 37.6/62.4. The heat of fusion of high-density polyethylene used was 155 J/g, and the crystallinity was 52.5%. and the heat of fusion in the sheets was 58.5 J/g, and the crystallinity excluding the diluent and polypropylene was 63.0%. The heat of fusion of homopolypropylene used was 85 J/g, and the crystallinity was 59%. And the heat of fusion in the sheets was 3.8 J/g, and the crystallinity excluding the diluent and polyethylene was 74.9%. Therefore, the average crystallinity of semicrystalline resins used was 53.1%, and the average crystallinity in the sheets was 60.9%. Other conditions for manufacturing were the same as those of Preferred embodiment 1. Stretching was done by simultaneous stretching at 118°C and 6 times each in the machine and transverse directions. The thickness of the films obtained through extraction, drying, and aging was 16 $\mu$m. The ratio of the pore region and the swollen region and the characteristics of the films thus manufactured were summarized in Table 1.

Comparative Example 1

As a semicrystalline polymer, linear low-density polyethylene having a weight average molecular weight of 2.0 x $10^5$ g/mol and containing 8.5 weight % of octane-1 as a co-monomer was used. Also used was calcium carbonate having an average particle size of 1.5 $\mu$m and coated with stearic acid. The ratio of two components was 50/50. The sheets extruded and cooled were stretched 2 times at 80°C in the machine direction without the process of phase separation. The final thickness of the films was 40 $\mu$m.

Comparative Example 2

High-density polyethylene having a weight average molecular weight of 3.0 x $10^5$ g/mol was used as a semicrystalline polymer, and a paraffin oil having kinetic viscosity of 95 cSt at 40 °C was used for the diluent. The weight ratio of the semicrystalline polymer and the diluent was 60/40, and the ratio of volume was 57.8/42.2. The heat of fusion of high-density polyethylene used was 190 J/g, and the crystallinity was 64.4%. And the heat of fusion within the sheets was 119 J/g, and the crystallinity excluding the diluent was 67.2%. Stretching was done by simultaneous stretching at 118 °C and 6 times each in the machine and transverse directions. The thickness of the films obtained through extraction, drying, and aging was 16 $\mu$m.

Comparative Example 3

High-density polyethylene having a weight average molecular weight of 4.0 x $10^5$ g/mol and containing 0.5 weight % of butene-1 as a co-monomer was used as a semicrystalline polymer, and a paraffin oil having kinetic viscosity of 95 cSt at 40 °C was used for the diluent. The weight ratio of the semicrystalline polymer and the diluent was 15/85, and the volume ratio was 13.9/86.1. The heat of fusion of high-density polyethylene used was 155 J/g, and the crystallinity was 52.5%. And the heat of fusion within the sheets was 33 J/g, and the crystallinity excluding the diluent was 74.5%. Stretching was done by simultaneous stretching at 115 °C and 6 times each in the machine and transverse directions. The thickness of the films obtained through extraction, drying, and aging was 16 $\mu$m.

[Table 1]

| | | | Preferred Embodiments | | Comparative Examples | | |
|---|---|---|---|---|---|---|---|
| Raw materials | | | 1 | 2 | 1 | 2 | 3 |
| High-density polyethylene (Mw=3.0x$10^5$ g/mol) | | | 40 | - | - | 60 | - |
| High-density polyethylene (Butene-1 = 0.5 wt %, Mw=4.0x$10^5$ g/mol) | | | - | 31.5 | - | - | 15 |
| Linear low-density polyethylene (Octene-1 = 8.5 wt %, Mw=2.0x$10^5$ g/mol) | | | - | - | 50 | - | - |
| Homopolypropylene (Mw=4.5x$10^5$ g/mol) | | | - | 3.5 | - | - | - |
| Paraffin oil (95cSt at 40°C) | | | - | - | - | 40 | 85 |
| Dibutyl phthalate | | | 60 | 65 | - | - | - |
| Calcium carbonate (stearic acid coating, 1.5 um) | | | - | - | 50 | - | - |
| Characteristics | | Units | | | | | |
| Pore region | Porosimeter | Vol.% | 24.3 | 29.0 | - | 6.0 | 56.0 |
| | SEM | | 14.7 | 23.8 | - | - | 47.0 |

(continued)

| | | | Preferred Embodiments | | Comparative Examples | | |
|---|---|---|---|---|---|---|---|
| Raw materials | | | 1 | 2 | 1 | 2 | 3 |
| Gas permeability | Sheets | 10⁻⁵Darcy | 1.6 | 2.4 | - | 0.3 | 6.5 |
| | Microporous films (Film) | | 1.3 | 1.6 | 3.0 | 0.5 | 5.2 |
| Average diameter of pores | Sheets | $\mu$m | 0.09 | 0.11 | - | 0.04 | 0.21 |
| | Microporous films (Film) | | 0.06 | 0.08 | 0.8 | 0.05 | 0.12 |
| Swelling ratio (SR) | | Vol.% | 285 | 324 | 0.0 | 268 | 509 |
| Puncture strength (Film) | | N/$\mu$m | 0.27 | 0.25 | 0.03 | 0.29 | 0.07 |
| Appearance | | - | Super -ior | Super -ior | Bad | Supe - rior | Supe - rior |
| Fabricability of sheets | | - | Super -ior | Super -ior | Good | Good | Good |

[Industrial Applicability]

As described in the above, it is seen that the present invention enables the manufacture of microporous films of semicrystalline polymers through the stretching process of the pore region, swollen region, and crystalline region formed from the phase separation process between a semicrystalline polymer resin and a diluent without the addition of a foaming agent generating pores internally or a filler making pores through the plastic deformation process such as stretching, etc. at the interface with the polymer resin forming the matrix, and further, the implementation of separation membranes having various physical properties by using the above microporous films.

The present invention also enables the manufacture of uniform microporous films having stable physical properties on the whole by controlling the morphology of the cross-section of microporous films since permeabilities of the sheets before and after stretching are not changed greatly.

While certain present preferred embodiments and comparative examples of the invention have been shown and described, it is to be distinctly understood that the invention is not limited thereto but may be otherwise variously embodied and practiced within the scope of the followi3ng claims.

**Claims**

1. A method of manufacturing microporous polymer films by stretching sheets at a temperature that is lower than the melting temperature of the crystalline portion of said sheets by 3 to 15°C, obtained through phase separation of a semicrystalline polymer and a diluent, and extracting said diluent, wherein the cross-section of said sheets is comprised of the crystalline region, the pore region penetrating the sheet in thickness direction by connecting in three dimensions, and the non-crystalline region swollen by said diluent,
wherein said pore region has irregular sizes and structures, an average diameter of the pore is 0.01 $\mu$m to 2 $\mu$m, and a volume ratio of the pore region with respect to the volume of the entire composition is 10% to 40%, and wherein said non-crystalline region has a swelling ratio of 200% or greater, is split during the process of stretching, and generates pores having an average diameter of 0.01 $\mu$m to 1 $\mu$m.

2. The method of manufacturing microporous polymer films in Claim 1, wherein said semicrystalline polymer contains polyethylene and polypropylene.

3. The method of manufacturing microporous polymer films in Claim 1, wherein said microporous polymer films have a gas permeability of 1.3 x 10⁻⁵ Darcy or greater and a puncture strength of 0.1 N/$\mu$m or greater.

4. The method of manufacturing microporous polymer films in Claim 1, wherein said microporous films have a lower permeability than the permeability of said resin sheets extracted before stretching.

**5.** The method of manufacturing microporous polymer films in any of Claims 1 through 4, wherein said phase separation has a separate phase separation zone in an extruder.

**Patentansprüche**

**1.** Verfahren zur Herstellung mikroporöser Polymerfilme durch Recken von Folien bei einer Temperatur, die um 3 bis 15°C niedriger ist als die Schmelztemperatur des kristallinen Teils der Folien, erhalten durch Phasentrennung eines halbkristallinen Polymers und eines Verdünnungsmittels und Extrahieren des Verdünnungsmittels, wobei der Querschnitt der Folien aus der kristallinen Region, der Porenregion, die die Folie in Dickerichtung durch Verbinden in drei Dimensionen durchdringt, und der nichtkristallinen Region, die durch das Verdünnungsmittel gequollen ist, besteht,
wobei die Porenregion unregelmäßige Größen und Strukturen hat, der durchschnittliche Durchmesser der Pore 0,01 $\mu$m bis 2 $\mu$m ist und das Volumenverhältnis der Porenregion bezüglich des Volumens der gesamten Zusammensetzung 10% bis 40% ist, und
wobei die nichtkristalline Region ein Quellungsverhältnis von 200% oder größer hat, während des Reckverfahrens gespalten wird und Poren erzeugt, die einen durchschnittlichen Durchmesser von 0,01 $\mu$m bis 1 $\mu$m haben.

**2.** Verfahren zur Herstellung mikroporöser Polymerfilme gemäß Anspruch 1, wobei das halbkristalline Polymer Polyethylen und Polypropylen enthält.

**3.** Verfahren zur Herstellung mikroporöser Polymerfilme gemäß Anspruch 1, wobei die mikroporöse Polymerfilme eine Gaspermeabilität von 1,3 x 10$^{-5}$ Darcy oder größer und eine Durchschlagfestigkeit von 0,1 N/$\mu$m oder größer haben.

**4.** Verfahren zur Herstellung mikroporöser Polymerfilme gemäß Anspruch 1, wobei die mikroporösen Filme eine niedrigere Permeabilität als die Permeabilität der Harzfolien, die vor dem Recken extrahiert wurden, haben.

**5.** Verfahren zur Herstellung mikroporöser Polymerfilme gemäß einem der Ansprüche 1 bis 4, wobei die Phasentrennung eine getrennte Phasentrennungszone in einem Extruder hat.

**Revendications**

**1.** Procédé de fabrication de films polymères microporeux en étirant des feuilles à une température qui est inférieure à la température de fusion de la partie cristalline desdites feuilles de 3 à 15 °C, obtenues par séparation de phases d'un polymère semi-cristallin et d'un diluant, et en extrayant ledit diluant, dans lequel la section transversale desdites feuilles est composée de la région cristalline, la région poreuse pénétrant la feuille dans une direction d'épaisseur en raccordant en trois dimensions, et la région non cristalline gonflée par ledit diluant,
dans lequel ladite région poreuse présente des tailles et des structures irrégulières, un diamètre moyen du pore est de 0,01 $\mu$m à 2 $\mu$m, et un rapport de volume de la région poreuse par rapport au volume de la composition entière est de 10 % à 40 %, et
dans lequel ladite région non cristalline présente un rapport de gonflement de 200 % ou supérieur, est divisée durant le processus d'étirement, et génère des pores présentant un diamètre moyen de 0,01 $\mu$m à 1 $\mu$m.

**2.** Procédé de fabrication de films polymères microporeux selon la revendication 1, dans lequel ledit polymère semi-cristallin contient du polyéthylène et du polypropylène.

**3.** Procédé de fabrication de films polymères microporeux selon la revendication 1, dans lequel lesdits films polymères microporeux présentent une perméabilité au gaz de 1,3 x 10$^{-5}$ Darcy ou supérieure et une résistance à la perforation de 0,1 N/$\mu$m ou supérieure.

**4.** Procédé de fabrication de films polymères microporeux selon la revendication 1, dans lequel les films microporeux présentent une perméabilité inférieure à la perméabilité desdites feuilles de résine extraites avant l'étirement.

**5.** Procédé de fabrication de films polymères microporeux selon l'une quelconque des revendications 1 à 4, dans lequel ladite séparation de phases présente une zone de séparation de phases séparée dans une extrudeuse.

**EP 1 963 408 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6319975 B
- US 4335193 A
- US 5641565 A
- US 5853633 A
- US 6558607 B1
- WO 03042747 A2